# EUROPEAN PATENT SPECIFICATION

(11) **EP 2 202 144 B1**
(45) Date of publication and mention of the grant of the patent: **29.07.2015**
(21) Application number: 08761554.8
(22) Date of filing: 25.04.2008
(51) Int. Cl.: B63H 9/06, F03B 13/00, F03D 9/00, F03B 17/00

(54) **RIGID SAIL WITH CONFIGURABLE PROFILE**
STARRES SEGEL MIT KONFIGURIERBAREM PROFIL
VOILE RIGIDE À PROFIL CONFIGURABLE

(30) Priority: 27.04.2007 ES 200701150
(43) Date of publication of application: 30.06.2010
(73) Proprietor: Bermúdez Sánchez, Ignacio, 08784-Piera (Barcelona) (ES); Bermudez Miquel, Jose Miguel, 08784-Piera (Barcelona) (ES)
(72) Inventor: Bermúdez Sánchez, Ignacio, 08784-Piera (Barcelona) (ES); Bermudez Miquel, Jose Miguel, 08784-Piera (Barcelona) (ES)
(74) Representative: Oficina Ponti, SLP
(86) International application number: PCT/ES2008/000309
(87) International publication number: WO 2008/132262

(56) References cited:
- EP-A1- 1 785 345
- FR-A1- 2 862 278
- GB-A- 1 184 914
- US-A- 5 671 690
- US-A- 5 775 249
- US-A- 5 931 109
- US-A1- 2002 100 406
- US-A1- 2005 252 764

## Description

### Technical field of the invention

The invention refers to a rigid sail, with a configurable profile, formed by a rigid structure with a tapering cross-section, constituted by two convex or concave-convex and faced side walls, joined in two common end edges, defining an internal space in the rigid structure.

### Background of the invention

It is known in fluid mechanics that the efficiency of the sails is lower than that of the airplane wings. In these, the difference between the sustentation force and the weight permits the airplane to fly, thanks to the fact that the aerodynamic limit layer of the air is not detached from the profile, along which it presents a laminar regime. On the other hand, in conventional sails in the naval sector, the thrust of the wind blows the sail and produces, by thrust, a resulting force that permits the ship or vessel to advance. Contrary to what happens in avionics, the limit layer does not present a laminar regime, but a high turbulence.

During long time it is desired a sail for aquatic navigation that presents the advantages of the aviation wings. To this end, there have been a lot of attempts to provide rigid sails with aerodynamic profile of aeronautic kind.

Among them, it can be cited "Flettner"-kind rotors, already described in 1926 by Anton Flettner (FLETTNER, Anton, Mein Weg zum Rotor, Leipzing (Köhler & Amelang, 1926)), and cited e.g. in European patent EP 040 597.

Patent WO 2004024556 discloses a rigid sail that is composed from two parts that can relatively rotate according to a vertical axis to determine the intrados and extrados of a sail as an aerodynamic profile used for aeronautic wings.

WO 0189923 discloses a rigid sail with a hinged aerodynamic profile comprising three vertical elements (or modules), each being formed by three horizontal elements (or sections) hinged to each other, so that the concavity or convexity of the intrados or extrados of the rigid wing or sail can be configured.

Patent US 7146918 discloses a system for generating electric energy and hydrogen (H₂) from seawater and eolian energy, in floating systems in the water that comprise rigid sails.

Patent FR 2648426 discloses a wing composed by a rigid part and a flexible part that is kept hidden inside a housing of the rigid part, permitting different aerodynamic configurations.

Despite this attempts, from which only some illustrative examples have been described, currently there is no versatile, economical and easy operation device. The end of the present invention is to provide a solution to this demand.

Document US 2002/0100406 constitutes the closest prior art.

### Summary of the invention

To this end, the object of the invention is a rigid sail of the kind cited previously, with a configurable profile, with a novel concept and functionality, that it is characterized in that it comprises:
closing elastic sheets, each associated with each rigid wall, joined to the corresponding wall in at least one zone close to said external edge;
external closed spaces of variable volume, defined between each lateral rigid wall and each elastic sheet, at each side of the sail;
a plurality of perforations, provided at the rigid walls and adapted for the passage of air from the internal space of the rigid structure to said external closed spaces;
means for generating and supplying compressed air to blow air in the external closed spaces through said perforations, to blow said elastic sheets, increasing the volume of the external closed spaces; and
means for generating and supplying vacuum, to create vacuum at said external closed spaces through said perforations, to deflate said elastic sheets, decreasing the volume of the external closed spaces;
so that the volume of each external closed space of each side of the sail can be voluntarily modified, according to the direction and sense of the wind, to determine an aerodynamic intrados or extrados at one or another side of the sail.

According to other features of the invention, the rigid sail comprises rotation means according to a vertical axis and/or rotation means according to a horizontal axis.

The rigid sail of the invention will preferably associated to a ship hull.

The rigid sail of the invention is applicable to the movement of a ship, and it can also the applied, as it is associated to turbine means, for generating a brake effect to transform the wind energy in rotation energy of a turbine axis.

The rigid sail according to the invention can be associated to electric energy generation means by an alternator associated to the turbine.

A particularly interesting application is to generate H₂, from a molecular dissociation of the water of the aquatic medium on which the corresponding ship moves.

### Brief description of the drawings

In the attached drawings, as a non-limitative example, an embodiment of the rigid sail object of the invention is shown. In said drawings:

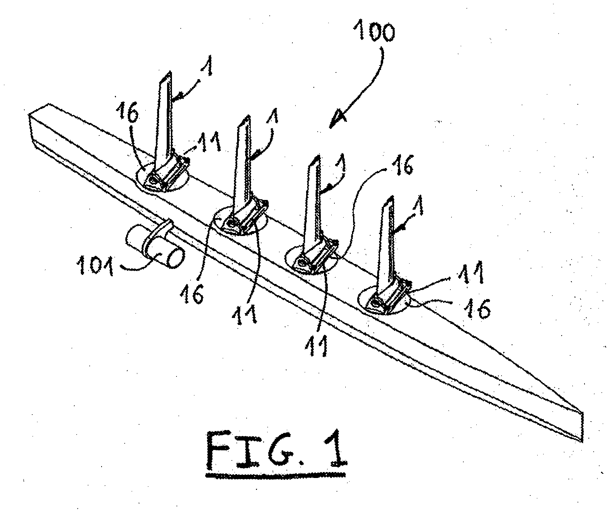

Fig. 1 is a perspective view of a ship that includes rigid sails according to the invention;
Fig. 2 is a detail view according II in Fig. 1;
Fig. 3 is a detail perspective view, shown from below of Fig. 1, that shows the vertical rotation means of the sail of the invention;
Fig. 4 is a section view of a rigid sail according to the invention;
Fig. 5 is a perspective view of a part of the rigid sail of the invention, in an operative position in which the wind comes according to the arrows; and
Fig. 6 is a similar view as Fig. 5, but in another operative position in which the wind has an essentially opposed direction.

### Detailed description of the drawings

In said drawings it can be see a ship 100 that includes, in this embodiment, 4 sails according to the invention. It is clear that the concept is extensible to any sailing ship with a different number of sails 1.

The rigid sail 1 of the invention finds a particular application, even though not exclusive, to be used in ships for the generation of electric energy and, through it, to obtain hydrogen from water from sea, rivers, lakes or any aquatic media. To this end, the ship 100 includes a turbine 101 for generating a brake effect, thanks to the high energy excess recovered by the sail 1 profile (as it is explained afterwards), to transform the wind energy in rotation energy in an axis of the turbine, by an alternator associated with the turbine. The system is complemented with means for generating molecular hydrogen, H₂, from the molecular dissociation of the water of the aquatic medium on which the corresponding ship moves. Said H₂ generating means can be of a known kind, so that it will not be explained in detail.

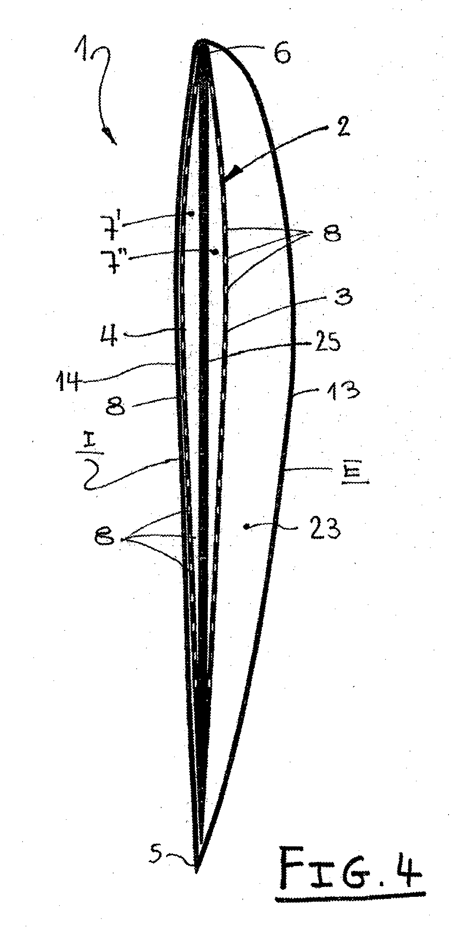

To this end, the rigid sail 1 of configurable profile, according to the invention, and as it can be seen in detail in Figs. 4, 5 and 6, is formed by a rigid structure 2 with a tapering cross-section, constituted by two side rigid walls 3, 4, convex and faced, joined in two end edges 5, 6, defining an internal space 7 in the rigid structure 2. In the shown embodiment, this internal space 7 is divided into two parts 7' and 7" (Fig. 4), separated by an intermediate partition 25.

There are closing elastic sheets 13, 14 associated to each of the rigid walls 3, 4, joined to the corresponding wall in at least a zone close to said end edge 5, 6. The sheets 13 and 14 are extensible by plastic deformation, to determine variable volumes, or external closed spaces 23, 24, between each side rigid wall 3, 4 and each elastic sheet 13, 14, at each side of the sail 1, whose capacity and shape will depend on the direction and sense of the wind, to configure the efficient profile of the sail with configurable profile 1, according to the invention and according to the operative mode that is explained hereinafter.

To this end, the rigid walls 3 and 4 are provided, at least in part of them, with multiple perforations 8, adapted for passing the air from the internal space 7 of the rigid structure 2 to said external closed spaces 23, 24.

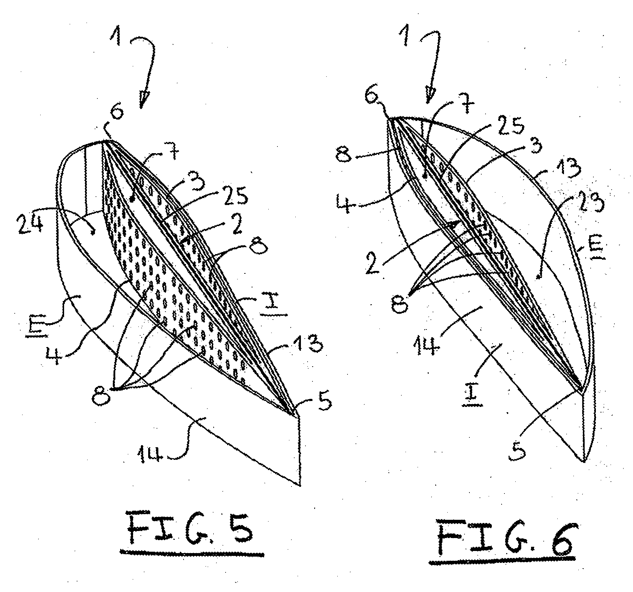

Means for generating and supplying compressed air, e.g. an air compressor (not shown), are placed in the ship 100, to blow air in the external closed spaces 23, 24 through said perforations 8, and by pipes (not shown), that run inside the parts or halves 7' and 7" of the space 7 and blow compressed air, through the perforations 8, inside the external closed spaces 23 and 24 of variable volume, to blow said elastic sheets 13, 14 and to increase the volume of the external closed spaces 23 and 24. Therefore, it is determine an extrados E, or zone of the greatest convexity, at the leeward zone of the ship or vessel 100 (at the right of the partition 25 in Figs. 4 and 6, and at the left in the case of Fig. 5).

In a similar way, means for generating and supplying vacuum are associated with the sail 1, to create vacuum inside said external closed spaces 23, 24 through said perforations 8, to deflate said elastic sheets 13, 14, decreasing the volume of the external closed spaces 23 and 24, to determine an intrados I, or zone with the lowest convexity, in the windward zone of the ship or vessel 100 (at the left of partition 25 in Figs. 4 and 6, and at the right of it in Fig. 5).

Therefore, each external closed space 23, 24 of each side of the sail 1 can be modified voluntarily, according to the direction and sense of the wind, to determine an aerodynamic intrados or extrados at one or the other side of the sail 1, determining therefore its novel feature of "configurable profile".

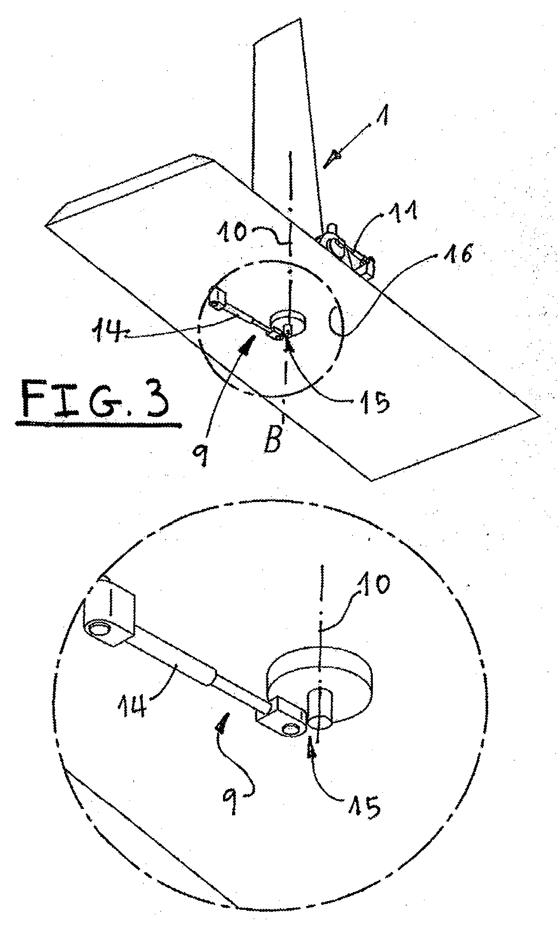

The sail 1 of the invention is associated with rotating means 9 about a vertical axis 10 to modify voluntarily the angle of the sail with respect to the direction and sense of the wind. Said means comprises, in the shown example, a cylinder 14 of horizontal actuation, that acts as a crank of a crank-connecting rod system 15, on a vertical rotation axis 10 of the sail (Fig. 3). The rotating means 9 can be mounted in a housing 16 of the hull of the ship 100.

Preferably, it would be desirable to create an extrados zone (E) and to face it windward, and create a depression zone to conform an intrados (I) in the leeward zone, at the opposed side. The aerodynamic profile of the sail 1 will permit, not only the movement of the ship, but it will produce an energy excess, applicable at the turbine axis 101, which will act as a brake, limiting as necessary the speed of the ship, to generate electric energy. It can be used to produce molecular hydrogen from the dissociation of water in the aquatic medium on which the ship 100 moves.

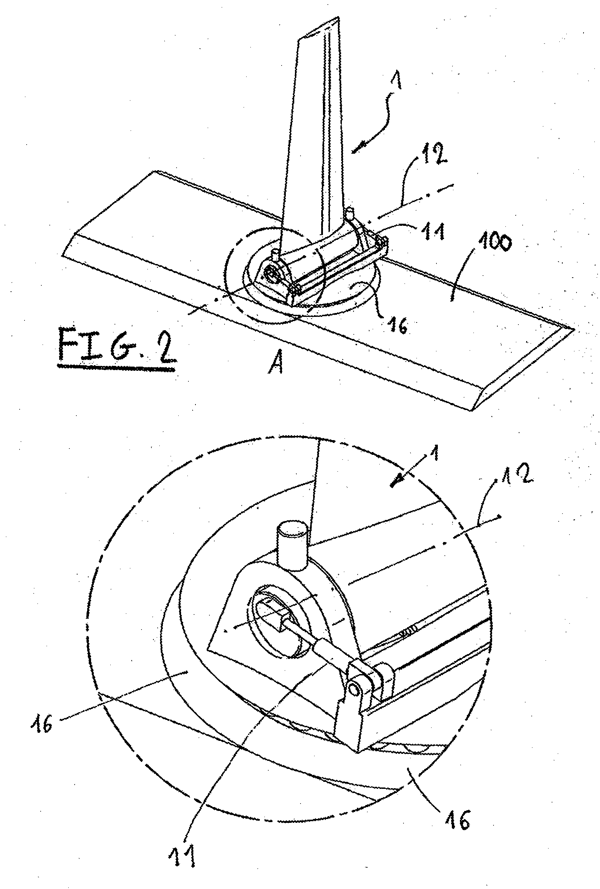

Rotating means 11 according to a horizontal axis 12 (Fig. 2) serves to permit the sails 2 to be folded if necessary, e.g. in the case of storm. The rotating means 11 will comprise preferably cylinders 17 or equivalent means.

The nature of the present invention being sufficiently disclosed, and also its implementation, it is pointed out that anything that does not alter, change or modify its fundamental principle is subjected to detail variations, according to the attached claims.

## Claims

1. Rigid sail of configurable profile, formed by a rigid structure (2) with a tapering cross-section, **characterized in that** it is constituted by two convex or concave-convex side rigid walls (3, 4) and faced to each other, joined at two common end edges (5, 6), defining an internal space (7) in the rigid structure (2),
closing elastic sheets (13, 14), each associated to one of the rigid walls (3, 4), joined to the corresponding wall in at least a zone close to said end edge (5, 6);
external closed spaces (23, 24) of variable volume, defined between each side rigid wall (3, 4) and each elastic sheet (13, 14), at each side of the sail (1);
a plurality of perforations (8), provided at the rigid walls (3, 4) and adapted for the passage of air from the internal space (7) of the rigid structure (2) to said external closed spaces (23, 24);
means for generating and supplying compressed air to blow air in the external closed spaces (23, 24) through said perforations (8), to blow said elastic sheets (13, 14), increasing the volume of said external closed spaces; and
means for generating and supplying vacuum in said external closed spaces (23, 24) through said perforations (8), to deflate said elastic sheets (13, 14), decreasing the volume of the external closed spaces;
so that the volume of each external closed space (23, 24) at each side of the sail (1) can be modified voluntarily, according to the direction and sense of the wind, to determine an aerodynamic intrados (I) or extrados (E) at one or the other side of the sail (1).

2. Rigid sail according to claim 1, **characterized in that** it comprises rotating means (9) about a vertical axis (10) to rotate the sail (1) vertically according the direction and sense of the wind.

3. Rigid sail according to claim 1, **characterized in that** it comprises rotating means (11) about an horizontal axis (12) to fold total o partially the sail (1).

4. Rigid sail according to claim 1, **characterized in that** it is associated with a hull of a ship (100).

5. Rigid sail according to claim 4, **characterized in that** it is associated with turbine means (101) to generate a brake effect to transform the wind energy into rotation energy in an axis of the turbine.

6. Rigid sail according to claim 5, **characterized in that** it is associated with means for generating electric energy by an alternator associated with the turbine.

7. Rigid sail according to claim 5 or 6, **characterized in that** it comprises means for generating H₂, from the molecular dissociation of water in aquatic medium on which the corresponding ship moves.

## Patentansprüche

1. Starres Segel eines konfigurierbaren Profils, das durch eine starre Struktur (2) mit einem sich verjüngenden Querschnitt gebildet ist, **dadurch gekennzeichnet, dass** es durch zwei konvexe oder konkav-konvexe starre Seitenwände (3, 4) gebildet ist, die einander zugewandt sind und die an zwei gemeinsamen Endkanten (5, 6) verbunden sind, die einen Innenraum (7) in der starren Struktur definieren,
schließende elastische Lagen (13, 14), von denen jede einer der starren Wände (3, 4) zugeordnet ist und in zumindest einer nahe bei der Endkante (5, 6) liegenden Zone an die entsprechende Wand angefügt ist;
geschlossene Außenräume (23, 24) eines variablen Volumens, die zwischen jeder starren Seitenwand (3, 4) und jeder elastischen Lage (13, 14) auf jeder Seite des Segels (1) definiert sind;
eine Mehrzahl von Perforationen (8), die an den starren Wänden (3, 4) vorgesehen und zum Durchlassen von Luft von dem Innenraum (7) der starren Struktur (2) zu den geschlossenen Außenräumen (23, 24) angepasst sind;
eine Einrichtung zum Erzeugen und Zuführen von Druckluft, um Luft durch die Perforationen (8) in die geschlossenen Außenräume (23, 24) zu blasen, um die elastischen Lagen (13, 14) anzublasen, wodurch das Volumen der geschlossenen Außenräume erhöht wird; und
eine Einrichtung zum Erzeugen und Zuführen eines Vakuums in den geschlossenen Außenräumen (23, 24) durch die Perforationen (8), um die Luft aus den elastischen Lagen (13, 14) zu nehmen, wodurch das Volumen der geschlossenen Außenräume verringert wird;
so dass das Volumen jedes geschlossenen Außenraums (23, 24) auf jeder Seite des Segels (1) je nach der Windrichtung willkürlich modifiziert werden kann, um eine aerodynamische Krümmungsinnenseite (I) oder Krümmungsaußenseite (E) auf einer oder der anderen Seite des Segels (1) zu bestimmen.

2. Starres Segel gemäß Anspruch 1, **dadurch gekennzeichnet, dass** es eine Dreheinrichtung (9) um eine vertikale Achse (10) aufweist, um das Segel (1) je nach der Windrichtung vertikal zu drehen.

3. Starres Segel gemäß Anspruch 1, **dadurch gekennzeichnet, dass** es eine Dreheinrichtung (11) um eine horizontale Achse (12) aufweist, um das Segel ganz oder teilweise zusammenzuklappen.

4. Starres Segel gemäß Anspruch 1, **dadurch gekennzeichnet, dass** es einem Rumpf eines Schiffes (100) zugeordnet ist.

5. Starres Segel gemäß Anspruch 4, **dadurch gekennzeichnet, dass** es einer Turbineneinrichtung (101) zugeordnet ist, um einen Bremseffekt zu erzeugen, um die Windenergie in einer Achse der Turbine in Rotationsenergie umzuwandeln.

6. Starres Segel gemäß Anspruch 5, **dadurch gekennzeichnet, dass** es einer Einrichtung zum Erzeugen elektrischer Energie durch eine der Turbine zugeordnete Wechselstrommaschine zugeordnet ist.

7. Starres Segel gemäß Anspruch 5 oder 6, **dadurch gekennzeichnet, dass** es eine Einrichtung zum Erzeugen von H₂ ausgehend von der Moleküldissoziation von Wasser in einem aquatischem Medium, auf dem sich das entsprechende Schiff bewegt, aufweist.

## Revendications

1. Voile rigide à profil configurable, formée par une structure rigide (2) présentant une section transversale effilée, **caractérisée en ce qu'**elle est constituée par deux parois rigides latérales convexes ou concaves-convexes (3, 4) et opposées l'une à l'autre, jointes à deux bords d'extrémité communs (5, 6), définissant un espace interne (7) dans la structure rigide (2) ;
des films élastiques de fermeture (13, 14) chacun associé à l'une des parois rigides (3, 4), joints à la paroi correspondante dans au moins une zone proche dudit bord d'extrémité (5, 6) ;
des espaces fermés externes (23, 24) de volume variable, définis entre chaque paroi rigide latérale (3, 4) et chaque film élastique (13, 14), à chaque côté de la voile (1) ;
une pluralité de perforations (8), prévues dans les parois rigides (3, 4) et adaptées pour laisser passer de l'air en provenance de l'espace interne (7) de la structure rigide (2) vers lesdits espaces fermés externes (23, 24) ;
des moyens pour générer et fournir de l'air comprimé afin de souffler de l'air dans les espaces fermés externes (23, 24) à travers lesdites perforations (8), afin de gonfler lesdits films élastiques (13, 14), augmentant le volume desdits espaces fermés externes ; et
des moyens pour générer et appliquer un vide dans lesdits espaces fermés externes (23, 24) à travers lesdites perforations (8), pour dégonfler lesdits films élastiques (13, 14), diminuant le volume des espaces fermés externes,
de telle sorte que le volume de chaque espace fermé externe (23, 24) à chaque coté de la voile (1) puisse être modifié volontairement, suivant la direction et le sens du vent, afin de déterminer un intrados (I) ou un extrados (E) aérodynamique à l'un ou l'autre côté de la voile (1).

2. Voile rigide selon la revendication 1, **caractérisée en ce qu'**elle comprend des moyens de rotation (9) autour d'un axe vertical (10) pour faire tourner la voile (1) verticalement suivant la direction et le sens du vent.

3. Voile rigide selon la revendication 1, **caractérisée en ce qu'**elle comprend des moyens de rotation (11) autour d'un axe horizontal (12) pour plier complètement ou partiellement la voile (1).

4. Voile rigide selon la revendication 1, **caractérisée en ce qu'**elle est associée à une coque d'un bateau (100).

5. Voile rigide selon la revendication 4, **caractérisée en ce qu'**elle est associée à des moyens de turbine (101) pour générer un effet de freinage afin de transformer l'énergie du vent en énergie de rotation dans un axe de la turbine.

6. Voile rigide selon la revendication 5, **caractérisée en ce qu'**elle est associée à des moyens pour générer une énergie électrique par un alternateur associé à la turbine.

7. Voile rigide selon les revendications 5 ou 6, **caractérisée en ce qu'**elle comprend des moyens pour générer de l'H₂, à partir de la dissociation moléculaire de l'eau dans un milieu aquatique sur lequel le bateau correspondant navigue.
